# EUROPEAN PATENT SPECIFICATION

(11) **EP 3 321 059 B1**
(45) Date of publication and mention of the grant of the patent: **04.11.2020**
(21) Application number: 15897513.6
(22) Date of filing: 29.07.2015
(51) Int. Cl.: B29C 45/26, B29C 45/34, B29C 45/14, B29D 35/06, B29C 45/27

(54) **SHOE INJECTION MOLD AND SHOE INJECTION MOLDING METHOD USING SAME**
SCHUHSPRITZGIESSFORM UND SCHUHSPRITZGIESSVERFAHREN DAMIT
MOULE D'INJECTION POUR CHAUSSURE ET PROCÉDÉ DE MOULAGE DE CHAUSSURE PAR INJECTION L'UTILISANT

(30) Priority: 06.07.2015 CN 201510389609
(43) Date of publication of application: 16.05.2018
(73) Proprietor: Tu, Bo, Nanchang, Jiangxi 330200 (CN)
(72) Inventor: Tu, Bo, Nanchang, Jiangxi 330200 (CN)
(74) Representative: Roman, Alexis
(86) International application number: PCT/CN2015/085405
(87) International publication number: WO 2017/004857

(56) References cited:
- EP-A1- 2 815 668
- CN-A- 102 350 773
- CN-U- 203 523 928
- JP-A- S6 311 101
- JP-A- S54 138 747
- US-A- 4 076 790
- US-A- 4 276 254
- US-A- 4 651 444
- US-A1- 2014 068 879

## Description

### Field of the invention

The present invention relates to a shoe injection mold and an injection molding process thereof.

### Background of the invention

A known injection molding process of shoes is injecting melted plastic materials such as PVC or TPR by using an injection molding machine. A known shoe injection mold usually comprises a core, called as a last, and an outer die. The last is enclosed in the outer die. The cavity of shoe injection mold is composed of gap between the last and the outer die. The outer die is composed of a upper die and one or more bottom dies usually and then, can be opened and closed. The bottom die corresponds to the outer surface of the sole of shoe and the upper die corresponds to the outer surface of the upper of shoe. Usually, an upper die includes a left shell and a right shell which can be called as left die and right die. The number of the bottom die can be one or more according to injection molding process. A multiple injection process with more than one bottom die will produces a multilayer sole.

When the outer die is closed, the last is enclosed by the outer die and the gap between the last and the outer die constitutes a cavity of the shoe. In an injection molding processing of a shoe, the shoe injection mold is placed upside down; the bottom die is clamped at the top of the upper die. Melted plastic material (such as thermoplastic material) is injected into the cavity through one or more injection ports on the bottom die. When a fabric layer is required, a sock-shaped fabric is coverd on the last before injection. The melted plastic material injected from the injection port on the bottom die will press or extrude the sock-shaped fabric on the last tightly and form the upper of a shoe bonded with the sock-shaped fabric after curing. In this way, the sock-shaped fabric forms a fabric lining inside the upper and the outside of the upper is of plastic material.

US 4 651 444 A discloses the preamble of claim 1 and relates to a shoe injection mold with a last, outer die and upper die. Material is injected between inner and outer socks and slippers by using a nozzle that passes through the outer sock or slipper. JP S63 11101 A shows a similar configuration for injection between a sole and a sock. JP S54 138747 A discloses a mold for molding a shoe sole onto a last with sock or upper, where the last has recesses in the heel part. EP 2 815 668 A1 and US 4 276 254 A disclose molds with a last and outer dies for over-molding a sock and an exchangeable outer die for over-molding with sole material in a second step. US 2014/068879 A1 discloses injection via the last. US 4 076 790 A discloses a molding method, wherein the gate opening is located within recesses of the core, so that the melt pushes a film insert from behind towards the outer die. The gate is dome-shaped.

### Summary of the invention

To overcome above drawbacks of prior art, the present invention provides a shoe injection mold and an injection molding process by such an injection mold. A shoe with fabric (referring to fabric cloth, flannel, leather and other flexible sheet material) vamp can be formed by this injection molding process.

The solutions of the present invention are as follows:
A shoe injection mold comprising a last, an outer die, one or more injection nozzles and a matching mold opening-closing mechanism, wherein said outer die comprises a upper die and a matching first bottom die; one or more injection troughs are provided at the bottom of said last; one or more injection nozzle through-holes are arranged corresponding to said one or more injection troughs respectively on said first bottom die, said injection nozzle passes through matching injection nozzle through-hole with its inner end located in matching injection trough and its outer end located outside said outer die when said shoe injection mold is closed.

A shoe injection molding process, using a shoe injection mold which comprises a last, an outer die and one or more injection nozzles wherein said outer die comprises a upper die and a matching first bottom die, one or more injection troughs are provided at the bottom of said last, one or more injection nozzle through-holes are arranged corresponding to said one or more injection troughs respectively on said first bottom die, one or more injection holes matching with said one or more injection nozzles are provided on a sock-shaped fabric upper, comprising: pulling said sock-shaped fabric upper onto said last; closing said shoe injection mold so that said injection nozzle passes through matching injection nozzle through-hole with its inner end in matching injection trough and its outer end outside said outer die; and then, injecting melted plastic material into said shoe injection mold through said one or more injection nozzles until injected melted plastic material is full of the cavity of said shoe injection mold, said sock-shaped fabric upper covered on said last before injection is pressed from the outer surface of said last to the inner surface of said outer die by injected melted plastic material.

The present invention achieves following beneficial effects. Since the last is provided with one or more injections troughs, melted plastic material is directly injected to one or more injection troughs from injection nozzle(s). The melted plastic material injected in the injection trough flows out along the gap between injection trough and injection nozzle under the pressure in continuous injecting by an injection molding machine. As the injection trough(s) is inside the sock-shaped fabric upper, the melted plastic material flowing out of the injection trough will put the sock-shaped fabric upper outwardly until the sock-shaped fabric upper touch and is resisted by the inner surface of the outer die. At the same time, the melted plastic material flows in the cavity between the sock-shaped fabric upper and the last and the air inside the cavity escapes from a vent on mold until the cavity is filled. So, the outer surface of the upper is formed by sock-shaped fabric upper, having corresponding fabric texture and color. Since the sock-shaped fabric upper can be made by various materials and be of various kinds of colors and/or patterns, the shoes have good texture. This manufacture process is simple and of low cost and can meet different needs of different consumers.

### Brief description of the figures

Fig.1 is a schematic view of the shoe injection mold of the present invention;
Fig. 2 is a local enlarged schematic view of the injection mold of the present invention, including injection trough and guide groove;
Fig. 3 is a schematic view of the bottom of the last of the present invention.

### Detailed description of the embodiments

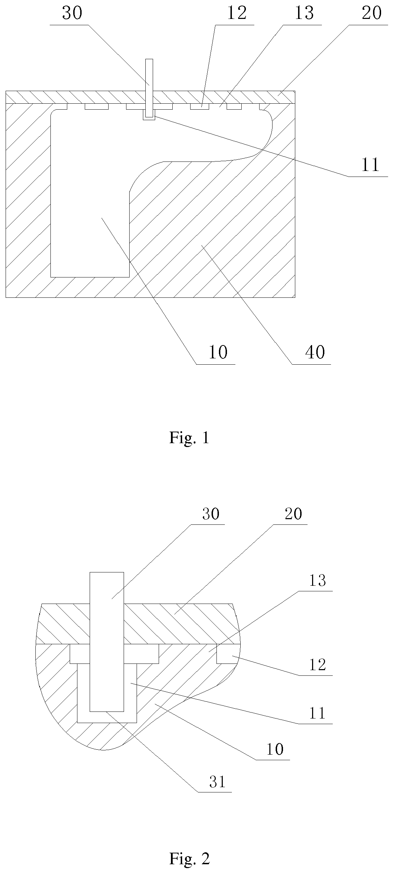

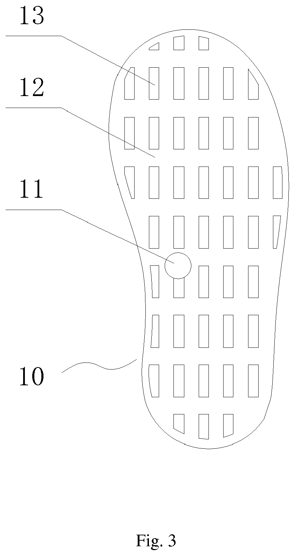

Referring to Fig. 1 to 3, the present invention relates to a shoe injection mold, comprising a last 10, an outer die, one or more injection nozzles 30 and a matching mold opening-closing mechanism which is used to open or close said outer die. The outer die comprises an upper die 40 and a matching first bottom die 20. One or more injection troughs 11 are provided at the bottom of said last 10. One or more injection nozzle through-holes are arranged corresponding to said one or more injection troughs 11 respectively on said first bottom die 20. Said an injection nozzle 30 passes through matching injection nozzle through-hole with its inner end 31 in matching injection trough 11 and its outer end outside said outer die when said shoe injection mold is closed. The opening-closing mechanism, which is designed according to the outer die to open and close the outer die, can adopt any suitable prior art. When the upper die 40 has a left shell (left die) and a right shell (right die), said opening-closing mechanism drives the left shell and/or the right shell, as well as the first bottom die 20, to turn to make the shoe injection mold in a status of opening or closing. When a sole is made by multiple injections using several bottom dies, one or more subsequent bottom dies are provided to covered the upper die 40 separately in different injection by the controlling/ Operating of the opening-closing mechanism. In a multiple injection process, different materials can be used in different injecting to form a sole of multilayer composite structure. The injection nozzles 30 can be inserted into the first bottom die 20 by a suitable manipulator or be pre-installed in the first bottom die 20. Other method can also be used to insert injection nozzles 30 into respective injection troughs 11 for first injection. The subsequent injection of the sole can be achieved by any appropriate prior art.

Preferably, the outer die further comprises one or more subsequent bottom dies for multiple injection of sole for multiple injection of sole which are matched with said upper die 40 respectively, so that the upper and first-layer of sole are formed integrally in the first injection. After first injection, one or more subsequent injections of the sole can be performed using one or more subsequent bottom dies. Because that the bottom of sock-shaped fabric upper is in the outer surface of the first-layer of sole formed by first injection, the second layer of sole formed by second injection using a second bottom die will cover the bottom of sock-shaped fabric upper and make it in the sole. The subsequent injections (if any) to form multiple layers of sole can be carried out according to prior arts.

Preferably, said one or more injection troughs 11 and said one or more injection nozzles 30 are all cylindrical and an annular gap is reserved between said injection nozzle 30 and its matching injection trough 11. Such a simple structure let injected melted plastic material to flow into and through said annular gap between the injection nozzle 30 and injection trough 11 smoothly and evenly. So, the sock-shaped fabric upper around an injection nozzle 30 is subject to outward extrusion force, even if the sock-shaped fabric upper is not perfectly attached with the injection nozzle 30 partially. The sock-shaped fabric upper around an injection nozzle 30 moves integrally towards the outer die driven by extrusion forces from all places. Outflow of injected material to outside of the sock-shaped fabric upper will to be reduced or avoided.

Preferably, a plurality of guide grooves 12 are provided on the bottom (corresponding to the sole) of said last 10. Said a plurality of guide grooves 12 and said one or more injection troughs 11 are connected with each other. Between said guide grooves 12 are discontinuous convex structures 13. All or part of said injection troughs 11 are located in or on a guide groove 12 separately. Melted plastic material injected into an injection will flow through the guide grooves 12 smoothly and spread everywhere beside the bottom of last 10. In a continuous injection, the outward extrusion force on the sock-shaped fabric upper prevents the melted plastic material effectively from overflowing to the outside of the sock-shaped fabric upper. In addition, the melted plastic material in a guide groove 12 will form a reinforcement-like grid structure of the sole after curing, which will reduce the gravity of sole and save material when the thickness of sole is determined.

Preferably, the guide grooves 12 comprise intersecting longitudinal grooves and transverse grooves and the convex structures 13 at the bottom of said last 10 are aligned horizontally and vertically. This structure can enhance the strength of the sole.

Preferably, one or more air vents are provided at the bottom of said upper die 40, from which air in the cavity of said shoe injection mold is discharged in the first injection.

The present invention also relates to a shoe injection molding process. The shoe injection mold used in the process comprises a last 10, an outer die and one or more injection nozzles 30 wherein said outer die comprises a upper die 40 and a matching first bottom die 20, one or more injection troughs 11 are provided at the bottom of said last 10, one or more injection nozzle through-holes are arranged corresponding to said one or more injection troughs 11 respectively on said first bottom die 20, one or more injection holes matching with said one or more injection nozzles 30 are provided on a sock-shaped fabric upper.

This process comprises:
pulling said sock-shaped fabric upper onto said last 10;
closing said shoe injection mold so that said injection nozzle 30 passes through matching injection nozzle through-hole with its inner end 31 in matching injection trough 11 and its outer end outside said outer die;
and then,
injecting melted plastic material into said shoe injection mold troughs through said one or more injection nozzles 30 until injected melted plastic material is full of the cavity of said shoe injection mold, said sock-shaped fabric upper covered on said last 10 before injection is pressed from the outer surface of said last 10 to the inner surface of said outer die by injected melted plastic material. A shoe made by this method will has a fabric vamp as the outer surface of upper of the shoe.

Preferably, said outer die further comprises one or more subsequent bottom dies which are matched with said upper die 40 respectively. After first injection (as described above) using said first bottom die 20 to form a shoe's upper and first layer of sole, one or more subsequent sole injections is performed by using said one or more subsequent bottom dies respectively to form a multilayer sole while the bottom of said sock-shaped fabric upper is in the multilayer sole.

Preferably, said one or more injection troughs 11 and said one or more injection nozzles 30 are all cylindrical and an annular gap is reserved between said injection nozzle 30 and matching injection trough 11. Injected melted plastic material flows through the annular gap evenly into all space of the cavity of said shoe injection mold in the first injection.

Preferably, a plurality of guide grooves 12 are provided at the bottom of said last 10. Said a plurality of guide grooves 12 and said one or more injection troughs 11 are connected with each other. Between said guide grooves 12 are discontinuous convex structures 13. Injected melted plastic material in said guide grooves 12 form a grid structure in the sole after curing.

Preferably, said guide grooves 12 comprise intersecting longitudinal grooves and transverse grooves. Said convex structures 13 at the bottom of said last 10 are aligned horizontally and vertically. This will optimize the reinforcement-like grid structure of the sole, prolong shoes life and prevent deformation.

Preferably, one or more air vents are provided at the bottom of said upper die 40 from which air in the cavity of said shoe injection mold is discharged in the first injection.

There are various preferred and optional technical means disclosed in the present invention may be combined arbitrarily to form a number of different technical solutions unless otherwise specified or a preferred or optional technical means is further defined by another technical means.

## Claims

1. A shoe injection mold comprising a last (10), an outer die, one or more injection nozzles (30) and a matching mold opening-closing mechanism, said outer die comprises a upper die (40) and a matching first bottom die (20); **characterized in that**:
one or more injection troughs (11) are provided at the bottom of said last (10);
one or more injection nozzle through-holes are arranged corresponding to said one or more injection troughs (11) respectively on said first bottom die (20),
said injection nozzle (30) passes through matching injection nozzle through-hole with its inner end (31) located in matching injection trough (11) and its outer end located outside said outer die when said shoe injection mold is closed.

2. The shoe injection mold according to claim 1 wherein said outer die further comprises one or more subsequent bottom dies for multiple injection of sole which are matched with said upper die (40) respectively.

3. The shoe injection mold according to claim 2 wherein said one or more injection troughs (11) and said one or more injection nozzles (30) are all cylindrical and an annular gap is reserved between said injection nozzle (30) and matching injection trough (11).

4. The shoe injection mold according to claim 1, 2 or 3 wherein a plurality of guide grooves (12) are provided on the bottom of said last (10), said a plurality of guide grooves (12) and said one or more injection troughs (11) are connected with each other, between said guide grooves (12) are discontinuous convex structures (13).

5. The shoe injection mold according to claim 4 wherein said guide grooves (12) comprise intersecting longitudinal grooves and transverse grooves, said convex structures (13) at the bottom of said last (10) are aligned horizontally and vertically, one or more air vents are provided at the bottom of said upper die (40).

6. A shoe injection molding process, using a shoe injection mold which comprises a last (10), an outer die and one or more injection nozzles (30) wherein said outer die comprises a upper die (40) and a matching first bottom die (20), one or more injection troughs (11) are provided at the bottom of said last (10), one or more injection nozzle through-holes are arranged corresponding to said one or more injection troughs (11) respectively on said first bottom die (20), one or more injection holes matching with said one or more injection nozzles (30) are provided on a sock-shaped fabric upper,
comprising
pulling said sock-shaped fabric upper onto said last (10);
closing said shoe injection mold so that said injection nozzle (30) passes through matching injection nozzle through-hole with its inner end (31) in matching injection trough (11) and its outer end outside said outer die;
and then,
injecting melted plastic material into said shoe injection mold through said one or more injection nozzles (30) until injected melted plastic material is full of the cavity of said shoe injection mold, said sock-shaped fabric upper covered on said last (10) before injection is pressed from the outer surface of said last (10) to the inner surface of said outer die by injected melted plastic material.

7. The process according to claim 6 wherein said outer die further comprises one or more subsequent bottom dies which are matched with said upper die (40) respectively, after first injection by using said first bottom die (20) to form a shoe's upper and first layer of sole, one or more subsequent sole injections is performed by using said one or more subsequent bottom dies respectively to form a multilayer sole while the bottom of said sock-shaped fabric upper is in the multilayer sole.

8. The process according to claim 7 wherein said one or more injection troughs (11) and said one or more injection nozzles (30) are all cylindrical and an annular gap is reserved between said injection nozzle (30) and matching injection trough (11), injected melted plastic material flows through the annular gap evenly into all space of the cavity of said shoe injection mold in the first injection.

9. The process according to claim 6, 7, or 8, wherein a plurality of guide grooves (12) are provided at the bottom of said last (10), said a plurality of guide grooves (12) and said one or more injection troughs (11) are connected with each others, between said guide grooves (12) are discontinuous convex structures (13), injected melted plastic material in said guide grooves (12) form a grid structure in the sole after curing.

10. The process according to claim 9, wherein said guide grooves (12) comprise intersecting longitudinal grooves and transverse grooves, said convex structures (13) at the bottom of said last (10) are aligned horizontally and vertically, one or more air vents are provided at the bottom of said upper die (40) from which air in the cavity of said shoe injection mold is discharged in the first injection.

## Patentansprüche

1. Schuhspritzgießform, einen Leisten (10), eine Außenmatrize, eine oder mehrere Einspritzdüsen (30) und einen passenden Formöffnungs-/-schließmechanismus umfassend,
wobei die Außenmatrize eine Obermaterialmatrize (40) und eine passende erste Bodenmatrize (20) umfasst; **dadurch gekennzeichnet, dass**
eine oder mehrere Einspritzmulden (11) am Boden des Leistens (10) vorgesehen sind;
eine oder mehrere Einspritzdüsendurchgangsbohrungen jeweils entsprechend der einen oder mehreren Einspritzmulden (11) in der ersten Bodenmatrize (20) angeordnet sind,
die Einspritzdüse (30) durch eine passende Einspritzdüsendurchgangsbohrung verläuft, wobei sich deren inneres Ende (31) in der passenden Einspritzmulde (11) befindet und sich deren äußeres Ende außerhalb der Außenmatrize befindet, wenn die Schuhspritzgießform geschlossen ist.

2. Schuhspritzgießform nach Anspruch 1, wobei die Außenmatrize ferner eine oder mehrere aufeinanderfolgende Bodenmatrizen für die Mehrfacheinspritzung der Sohle, die jeweils zur Obermaterialmatrize (40) passen, umfasst.

3. Schuhspritzgießform nach Anspruch 2, wobei die eine oder die mehreren Einspritzmulden (11) und die eine oder die mehreren Einspritzdüsen (30) alle zylindrisch sind und ein ringförmiger Spalt zwischen der Einspritzdüse (30) und der zugehörigen Einspritzmulde (11) vorgehalten wird.

4. Schuhspritzgießform nach Anspruch 1, 2 oder 3, wobei mehrere Führungsnuten (12) am Boden des Leistens (10) vorgesehen sind, wobei die mehreren Führungsnuten (12) und die eine oder die mehreren Einspritzwannen (11) miteinander verbunden sind, wobei sich zwischen den Führungsnuten (12) unterbrochene konvexe Strukturen (13) befinden.

5. Schuhspritzgießform nach Anspruch 4, wobei die Führungsnuten (12) einander schneidende Längsnuten und Quernuten umfassen, wobei die konvexen Strukturen (13) am Boden des Leistens (10) horizontal und vertikal ausgerichtet sind, wobei ein oder mehrere Lüftungsschlitze am Boden der Obermaterialmatrize (40) vorgesehen ist/sind.

6. Schuhspritzgießverfahren unter Verwendung einer Schuhspritzgießform, die einen Leisten (10), eine Außenmatrize und eine oder mehrere Einspritzdüsen (30) umfasst, wobei die Außenmatrize eine Obermaterialmatrize (40) und eine passende erste Bodenmatrize (20) umfasst, wobei eine oder mehrere Einspritzmulden (11) am Boden des Leistens (10) vorgesehen sind, wobei eine oder mehrere Einspritzdüsendurchgangsbohrungen jeweils entsprechend der einen oder mehreren Einspritzmulden (11) an der ersten Bodenmatrize (20) angeordnet sind, wobei die eine oder die mehreren Einspritzdüsendurchgangsbohrungen, die zu der einen oder den mehreren Einspritzdüsen (30) passen, auf einem sockenförmigen Stoffobermaterial vorgesehen sind, Folgendes umfassend:
Ziehen des sockenförmigen Stoffobermaterials auf den Leisten (10);
Schließen der Schuhspritzgießform, sodass die Einspritzdüse (30) durch eine passende Einspritzdüsendurchgangsbohrung verläuft, wobei sich deren inneres Ende (31) in der passenden Einspritzmulde (11) befindet und sich deren äußeres Ende außerhalb der Außenmatrize befindet;
und anschließend
Einspritzen geschmolzenen Kunststoffmaterials in die Schuhspritzgießform durch die eine oder mehreren Einspritzdüsen (30) bis eingespritztes, geschmolzenes Kunststoffmaterial den Hohlraum der Schuhspritzgießform gefüllt hat, wobei das den Leisten (10) vor der Einspritzung bedeckende sockenförmige Stoffobermaterial vom eingespritzten, geschmolzenen Kunststoffmaterial von der Außenfläche des Leistens (10) an die Innenfläche der Außenmatrize gedrückt wird.

7. Verfahren nach Anspruch 6, wobei die Außenmatrize eine oder mehrere aufeinanderfolgende Bodenmatrizen umfasst, die nach der ersten Einspritzung jeweils an die Obermaterialmatrize (40) angepasst werden, indem die erste Bodenmatrize (20) dazu verwendet wird, das Obermaterial des Schuhs und eine erste Sohlenlage auszubilden, wobei eine oder mehrere aufeinanderfolgende Sohleneinspritzungen durch die Verwendung der einen oder mehreren aufeinanderfolgenden Bodenmatrizen durchgeführt werden, um eine mehrlagige Sohle auszubilden, wobei sich der Boden des sockenförmigen Stoffobermaterials in der mehrlagigen Sohle befindet.

8. Verfahren nach Anspruch 7, wobei die eine oder mehreren Einspritzwannen (11) und die eine oder mehreren Einspritzdüsen (30) alle zylindrisch sind und ein ringförmiger Spalt zwischen der Einspritzdüse (30) und der zugehörigen Einspritzmulde (11) vorgehalten wird, wobei eingespritztes, geschmolzenes Kunststoffmaterial bei der ersten Einspritzung durch den ringförmigen Spalt gleichmäßig in den gesamten Hohlraum der Schuhspritzgießform fließt.

9. Verfahren nach Anspruch 6, 7 oder 8, wobei mehrere Führungsnuten (12) am Boden des Leistens (10) vorgesehen sind, wobei die mehreren Führungsnuten (12) und die eine oder die mehreren Einspritzwannen (11) miteinander verbunden sind, wobei sich zwischen den Führungsnuten (12) unterbrochene konvexe Strukturen (13) befinden, wobei in die Führungsnuten (12) eingespritztes, geschmolzenes Kunststoffmaterial nach dem Aushärten eine Netzstruktur in der Sohle ausbildet.

10. Verfahren nach Anspruch 9, wobei die Führungsnuten (12) einander schneidende Längsnuten und Quernuten umfassen, wobei die konvexen Strukturen (13) am Boden des Leistens (10) horizontal und vertikal ausgerichtet sind, wobei ein oder mehrere Lüftungsschlitze am Boden der Obermaterialmatrize (40) vorgesehen ist/sind, aus dem/denen Luft im Hohlraum der Schuhspritzgießform bei der ersten Einspritzung abgelassen wird.

## Revendications

1. Moule d'injection pour chaussure comportant une forme (10), une matrice extérieure, une ou plusieurs buses (30) d'injection et un mécanisme d'ouverture-fermeture de moule complémentaire,
ladite matrice extérieure comportant une matrice supérieure (40) et une première matrice inférieure (20) complémentaire ;
**caractérisé en ce que**
une ou plusieurs cuvettes (11) d'injection sont aménagées au fond de ladite forme (10) ;
un ou plusieurs trous débouchants de buse d'injection sont disposés de façon à correspondre respectivement à ladite ou auxdites cuvettes (11) d'injection sur ladite première matrice inférieure (20),
ladite buse (30) d'injection passe à travers un trou débouchant correspondant de buse d'injection, son extrémité intérieure (31) étant située dans une cuvette (11) d'injection correspondante et son extrémité extérieure étant située en dehors de ladite matrice extérieure lorsque ledit moule d'injection pour chaussure est fermé.

2. Moule d'injection pour chaussure selon la revendication 1, ladite matrice extérieure comportant en outre une ou plusieurs matrices inférieures subséquentes destinées à l'injection multiple de semelle, qui sont respectivement complémentaires de ladite matrice supérieure (40).

3. Moule d'injection pour chaussure selon la revendication 2, ladite ou lesdites cuvettes (11) d'injection et ladite ou lesdites buses (30) d'injection étant toutes cylindriques et un écartement annulaire étant ménagé entre ladite buse (30) d'injection et ladite cuvette (11) d'injection correspondante.

4. Moule d'injection pour chaussure selon la revendication 1, 2 ou 3, une pluralité de rainures (12) de guidage étant réalisée sur le fond de ladite forme (10), ladite pluralité de rainures (12) de guidage et ladite ou lesdites cuvettes (11) d'injection étant reliées entre elles, des structures convexes discontinues (13) se trouvant entre lesdites rainures (12) de guidage.

5. Moule d'injection pour chaussure selon la revendication 4, lesdites rainures (12) de guidage comportant des rainures longitudinales et des rainures transversales sécantes, lesdites structures convexes (13) au fond de ladite forme (10) étant alignées horizontalement et verticalement, un ou plusieurs évents à air étant réalisés au fond de ladite matrice supérieure (40).

6. Processus de moulage de chaussures par injection, utilisant un moule d'injection pour chaussure qui comporte une forme (10), une matrice extérieure et une ou plusieurs buses (30) d'injection, ladite matrice extérieure comportant une matrice supérieure (40) et une première matrice inférieure (20) complémentaire, une ou plusieurs cuvettes (11) d'injection étant aménagées au fond de ladite forme (10), un ou plusieurs trous débouchants de buse d'injection étant disposés de façon à correspondre respectivement à ladite ou auxdites cuvettes (11) d'injection sur ladite première matrice inférieure (20), un ou plusieurs trous d'injection correspondant à ladite ou auxdites buses (30) d'injection étant pratiqués sur une tige en tissu en forme de chaussette, comportant les étapes consistant à
enfiler ladite tige en tissu en forme de chaussette sur ladite forme (10) ;
fermer ledit moule d'injection pour chaussure de telle façon que ladite buse (30) d'injection passe à travers un trou débouchant correspondant de buse d'injection, son extrémité intérieure (31) se trouvant dans une cuvette (11) d'injection correspondante et son extrémité extérieure se trouvant en dehors de ladite matrice extérieure ;
puis à
injecter un matériau plastique fondu dans ledit moule d'injection pour chaussure à travers ladite ou lesdites buses (30) d'injection jusqu'à ce que le matériau plastique fondu injecté remplisse la cavité dudit moule d'injection pour chaussure, ladite tige en tissu en forme de chaussette dont est recouverte ladite forme (10) avant l'injection étant plaquée de la surface extérieure de ladite forme (10) vers la surface intérieure de ladite matrice extérieure par le matériau plastique fondu injecté.

7. Processus selon la revendication 6, ladite matrice extérieure comportant en outre une ou plusieurs matrices inférieures subséquentes qui sont respectivement complémentaires de ladite matrice supérieure (40), après une première injection en utilisant ladite première matrice inférieure (20) pour former la tige d'une chaussure et une première couche de semelle, une ou plusieurs injections de semelle subséquentes étant effectuées en utilisant ladite ou lesdites matrices inférieures subséquentes respectivement pour former une semelle multicouche tandis que le bas de ladite tige en tissu en forme de chaussette se trouve dans la semelle multicouche.

8. Processus selon la revendication 7, ladite ou lesdites cuvettes (11) d'injection et ladite ou lesdites buses (30) d'injection étant toutes cylindriques et un écartement annulaire étant ménagé entre ladite buse (30) d'injection et ladite cuvette (11) d'injection correspondante, du matériau plastique fondu injecté s'écoulant uniformément à travers l'écartement annulaire jusque dans tout l'espace de la cavité dudit moule d'injection pour chaussure lors de la première injection.

9. Processus selon la revendication 6, 7, ou 8, une pluralité de rainures (12) de guidage étant réalisée au fond de ladite forme (10), ladite pluralité de rainures (12) de guidage et ladite ou lesdites cuvettes (11) d'injection étant reliées entre elles, des structures convexes discontinues (13) se trouvant entre lesdites rainures (12) de guidage, du matériau plastique fondu injecté dans lesdites rainures (12) de guidage formant une structure en grille dans la semelle après durcissement.

10. Processus selon la revendication 9, lesdites rainures (12) de guidage comportant des rainures longitudinales et des rainures transversales sécantes, lesdites structures convexes (13) au fond de ladite forme (10) étant alignées horizontalement et verticalement, un ou plusieurs évents à air étant réalisés au fond de ladite matrice supérieure (40), à partir desquels de l'air présent dans la cavité dudit moule d'injection pour chaussure est évacué lors de la première injection.
